# EUROPEAN PATENT SPECIFICATION

(11) **EP 2 739 679 B1**
(45) Date of publication and mention of the grant of the patent: **03.05.2017**
(21) Application number: 11757943.3
(22) Date of filing: 04.08.2011
(51) Int. Cl.: C08K 5/00, C08L 23/14, H01B 3/44

(54) **ENERGY CABLE HAVING A THERMOPLASTIC ELECTRICALLY INSULATING LAYER**
ENERGIEKABEL MIT THERMOPLASTISCHER ELEKTRISCH ISOLIERENDEN SCHICHT
CÂBLE ÉLECTRIQUE COMPORTANT UNE COUCHE THERMOPLASTIQUE ÉLECTRIQUEMENT ISOLANTE

(43) Date of publication of application: 11.06.2014
(73) Proprietor: Prysmian S.p.A., 20126 Milano (IT)
(72) Inventor: PEREGO, Gabriele, I-20126 Milan (IT)
(74) Representative: Bottero, Carlo
(86) International application number: PCT/IB2011/053478
(87) International publication number: WO 2013/017916

(56) References cited:
- US-A- 4 551 499
- US-A1- 2004 038 030
- ZHAO Y ET AL: "On the crystallization, morphology and physical properties of a clarified propylene/ethylene copolymer", POLYMER, ELSEVIER SCIENCE PUBLISHERS B.V, GB, vol. 42, no. 15, 1 July 2001 (2001-07-01), pages 6587-6597, XP004235363, ISSN: 0032-3861, DOI: 10.1016/S0032-3861(01)00031-3

## Description

### Background of the invention

The present invention relates to an energy cable. In particular, the present invention relates to a cable for transporting or distributing electric energy, especially medium or high voltage electric energy, said cable having at least one thermoplastic electrically insulating layer.

Cables for transporting electric energy generally include at least one cable core. The cable core is usually formed by at least one conductor sequentially covered by an inner polymeric layer having semiconductive properties, an intermediate polymeric layer having electrically insulating properties, an outer polymeric layer having semiconductive properties. Cables for transporting medium or high voltage electric energy generally include at least one cable core surrounded by at least one screen layer, typically made of metal or of metal and polymeric material. The screen layer can be made in form of wires (braids), of a tape helically wound around the cable core or a sheet longitudinally surrounding the cable core. The polymeric layers surrounding the at least one conductor are commonly made from a polyolefin-based crosslinked polymer, in particular crosslinked polyethylene (XLPE), or elastomeric ethylene/propylene (EPR) or ethylene/propylene/diene (EPDM) copolymers, also crosslinked, as disclosed, e.g., in WO 98/52197. The crosslinking step, carried out after extruding the polymeric material onto the conductor, gives the material satisfactory mechanical and electrical properties even under high temperatures both during continuous use and with current overload.

To address requirements for materials which should not be harmful to the environment both during production and during use, and which should be recyclable at the end of the cable life, energy cables have been recently developed having a cable core made from thermoplastic materials, i.e. polymeric materials which are not crosslinked and thus can be recycled at the end of the cable life.

In this respect, electrical cables comprising at least one coating layer, for example the insulation layer, based on a polypropylene matrix intimately admixed with a dielectric fluid are known and disclosed in WO 02/03398, WO 02/27731, WO 04/066317, WO 04/066318, WO 07/048422, and WO 08/058572. The polypropylene matrix useful for this kind of cables comprises polypropylene homopolymer or copolymer or both, characterized by a relatively low cristallinity such to provide the cable with the suitable flexibility, but not to impair the mechanical properties and thermopressure resistance at the cable operative and overload temperatures. Performance of the cable coating, especially of the cable insulating layer, is also affected by the presence of the dielectric fluid intimately admixed with said polypropylene matrix. The dielectric fluid should not affect the mentioned mechanical properties and thermopressure resistance and should be such to be intimately and homogeneously admixed with the polymeric matrix.

Although the above electrical cables comprising at least one electrically insulation layer based on a polypropylene matrix intimately admixed with a dielectric fluid are usually endowed with excellent electrical properties, an improvement in terms of dielectric breakdown strength (DS) is of interest, particularly for high voltage (HV) power transmission applications.

US 4,551,499 relates to polymeric dielectrics having improved breakdown strength, particularly for HV applications. An improvement in the breakdown strength of polyethylene or polypropylene may be achieved by incorporating therein from about 0.01 to 5 % by weight of a nucleating agent comprising a substantially non-polar wax, such as ceresin wax. Alternatively, finely divided inert inorganic materials, such as talc, fumed silica or diatomaceous silica, may be added as nucleating agents to improve breakdown strength. No data are provided with respect to polypropylene.

In the article by Martin, C. P. et al, published in the 2003 Annual Report Conference on Electrical Insulation and Dielectric Phenomena, p. 309-312, a study about the short-term dielectric breakdown behaviour of a number of model polymer systems is reported. More specifically, an investigation on the effect of a nucleating additive on the morphology and breakdown behaviour is provided for a propylene/ethylene copolymer. Particularly, two propylene/ethylene copolymer systems, containing approximately 3% ethylene, were compared, namely the commercial grades Novolen™ 3240NC and Novolen™ 3200MC, both based on the same polymer but the latter being modified by the addition of 2000 ppm of a sorbitol-based clarifying agent. According to the experimental results reported by the authors, quenched batches of clarified and unclarified Novolen™ were found to possess identical mean breakdown strengths of 163 ± 6 kV/mm, while crystallized clarified and unclarified samples possessed values of 143 ± 8 kV/mm and 162 ± 11 kV/mm respectively. From the above data, it appears that the addition of a nucleating agent to a propylene/ethylene copolymer does not exert any significative influence on the breakdown strength of the material. US2004/0038030 A1 discloses a cable based on a thermoplastic comprising a homo- or copolymer of propylene having defined melting point and melt enthalpy properties in admixture with a dielectric fluid.

### Summary of the invention

The Applicant has faced the problem of improving the electrical performance, especially in terms of dielectric breakdown strength, of energy cables having, as electrically insulating layer, a thermoplastic coating based on propylene polymer or copolymer intimately admixed with a dielectric fluid. The above problem is particularly noticeable for high voltage (HV) power transmission cables, which are characterized by a high thickness of the insulating layer, typically of 8 mm or more. In fact, the Applicant has observed that, in that kind of insulating layers, formation of morphological defects (such as microvoids and microfractures) is more likely to occur, which can cause a reduction of dielectric strength. The Applicant believes that the above phenomenon is mainly due to the cooling rate of the insulating layer after extrusion, which is remarkably reduced because of the high layer thickness. A slow cooling can cause formation of crystallites of larger dimensions in the thermoplastic material, which are likely to cause morphological defects.

In order to solve the above problem, the Applicant has considered the possibility of supplementing the electrically insulating layer with an additive acting as a nucleating agent for the polypropylene phase so as to reduce the crystallite average size, without influencing the other properties of the insulating material and particularly without negatively affecting the delicate balance of properties achieved by the combination of the thermoplastic polymer with the dielectric fluid.

The Applicant has found that the addition of a nucleating agent, in particular a nucleating agent as defined hereinbelow, to an electrically insulating layer based on a thermoplastic polymer material intimately admixed with a dielectric fluid can remarkably reduce the risk of formation of such morphological defects.

Therefore, according to a first aspect the present invention relates to a cable comprising at least one electrical conductor and at least one electrically insulating layer surrounding said electrical conductor, wherein the at least one electrically insulating layer comprises:
(a) a thermoplastic polymer material selected from:
   - at least one copolymer (i) of propylene with at least one olefin comonomer selected from ethylene and an α-olefin other than propylene, said copolymer having a melting point greater than or equal to 130°C and a melting enthalpy of from 20 J/g to 90 J/g;
   - a blend of at least one copolymer (i) with at least one copolymer (ii) of ethylene with at least one α-olefin, said copolymer (ii) having a melting enthalpy of from 0 J/g to 120 J/g;
   - a blend of at least one propylene homopolymer with at least one copolymer (i) or copolymer (ii);
   at least one of copolymer (i) and copolymer (ii) being a heterophasic copolymer;
(b) at least one dielectric fluid intimately admixed with the thermoplastic polymer material;
(c) at least one nucleating agent, where the nucleating agent (c) is selected from aromatic sorbitol acetals of formula (III) as defined herein.

For the purpose of the present description and of the claims that follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

In the present description and in the subsequent claims, as "conductor" it is meant an electrically conducting element usually made from a metallic material, more preferably aluminium, copper or alloys thereof, either as a rod or as a stranded multi-wire, or a conducting element as above coated with a semiconductive layer.

For the purposes of the invention the term "medium voltage" generally means a voltage of between 1 kV and 35 kV, whereas "high voltage" means voltages higher than 35 kV.

As "electrically insulating layer" it is meant a covering layer made of a material having insulating properties, namely having a dielectric rigidity (dielectric breakdown strength) of at least 5 kV/mm, preferably greater than 10 kV/mm.

As "semiconductive layer" it is meant a covering layer made of a material having semiconductive properties, such as a polymeric matrix added with, e.g., carbon black such as to obtain a volumetric resistivity value, at room temperature, of less than 500 Ω·m, preferably less than 20 Ω·m. Typically, the amount of carbon black can range between 1 and 50% by weight, preferably between 3 and 30% by weight, relative to the weight of the polymer.

Preferably, the at least one nucleating agent is selected from organic nucleating agents. Inorganic nucleating agents could impair the dielectric performance of an insulating layer for high voltage cable.

More preferably, the at least one nucleating agent is selected from sorbitol derivatives.

With "heterophasic copolymer" it is meant a copolymer in which elastomeric domains, e.g. of ethylene-propylene elastomer (EPR), are dispersed in a propylene homopolymer or copolymer matrix.

The at least one electrically insulating layer can have a thickness of at least 8 mm, for example of at least 12 mm. The thickness of the insulating layer depends on the voltage intended to be carried by the cable and on the overall structure of the cable (conductor compositions and configuration, kind of material employed for the insulating layers, etc.). For example, a polyethylene insulated cable intended for carrying 400 kV and having a single conductor made of stranded copper wires can have an insulating layer 27 mm thick.

Preferably, the thermoplastic polymer material (a) has a melt flow index (MFI), measured at 230°C with a load of 21.6 N according to ASTM Standard D1238-00, of from 0.05 dg/min to 10.0 dg/min, more preferably from 0.4 dg/min to 5.0 dg/min.

The olefin comonomer in copolymer (i) can be ethylene or an α-olefin of formula CH₂=CH-R, wherein R is a linear or branched C₂-C₁₀ alkyl, selected, for example, from: 1-butene, 1-pentene, 4-methyl-1-pentene, 1-hexene, 1-octene, 1-decene, 1-dodecene, or mixtures thereof. Propylene/ethylene copolymers are particularly preferred.

The olefin comonomer in copolymer (i) is preferably present in an amount equal to or lower than 15 mol%, more preferably equal to or lower than 10 mol%.

The olefin comonomer in copolymer (ii) can be an olefin of formula CH₂=CHR, wherein R represents a linear or branched alkyl group containing from 1 to 12 carbon atoms. Preferably, said olefin is selected from propylene, 1-butene, isobutylene, 1-pentene, 4-methyl-1-pentene, 1-hexene, 1-octene, 1-dodecene, or mixtures thereof. Propylene, 1-butene, 1-hexene and 1-octene are particularly preferred.

According to a preferred embodiment, at least one copolymer (ii) is a linear low density polyethylene (LLDPE) copolymer. Preferably the olefin comonomer in LLDPE is present in an amount from 2 to 12 wt%.

According to a preferred embodiment, copolymer (i) or copolymer (ii) or both are random copolymers. With "random copolymer" it is meant a copolymer in which the comonomers are randomly distributed along the polymer chain.

Advantageously, in copolymer (i) or copolymer (ii) or both, when heterophasic, an elastomeric phase is present in an amount equal to or greater than 45 wt% with respect to the total weight of the copolymer.

Particularly preferred heterophasic copolymers (i) or (ii) are those wherein the elastomeric phase consists of an elastomeric copolymer of ethylene and propylene comprising from 15 wt% to 50 wt% of ethylene and from 50 wt% to 85 wt% of propylene with respect to the weight of the elastomeric phase.

Preferred heterophasic copolymers (ii) are propylene copolymers, in particular:
(ii-a) copolymers having the following monomer composition: 35 mol%-90 mol% of ethylene; 10 mol%-65 mol% of an aliphatic α-olefin, preferably propylene; 0 mol%-10 mol% of a polyene, preferably a diene, more preferably, 1,4-hexadiene or 5-ethylene-2-norbornene (EPR and EPDM rubbers belong to this class);
(ii-b) copolymers having the following monomer composition: 75 mol%-97 mol%, preferably 90 mol%-95 mol%, of ethylene; 3 mol%-25 mol%, preferably 5 mol%-10 mol%, of an aliphatic α-olefin; 0 mol%-5 mol%, preferably 0 mol%-2 mol%, of a polyene, preferably a diene (for example ethylene/1-octene copolymers).

Heterophasic copolymers can be obtained by sequential copolymerization of: 1) propylene, possibly containing minor quantities of at least one olefin comonomer selected from ethylene and an α-olefin other than propylene; and then of: 2) a mixture of ethylene with an α-olefin, in particular propylene, optionally with minor portions of a polyene.

The term "polyene" generally means a conjugated or non-conjugated diene, triene or tetraene. When a diene comonomer is present, this comonomer generally contains from 4 to 20 carbon atoms and is preferably selected from: linear conjugated or non-conjugated diolefins such as, for example, 1,3-butadiene, 1,4-hexadiene, 1,6-octadiene, and the like; monocyclic or polycyclic dienes such as, for example, 1,4-cyclohexadiene, 5-ethylidene-2-norbornene, 5-methylene-2-norbornene, vinylnorbornene, or mixtures thereof. When a triene or tetraene comonomer is present, this comonomer generally contains from 9 to 30 carbon atoms and is preferably selected from trienes or tetraenes containing a vinyl group in the molecule or a 5-norbornen-2-yl group in the molecule. Specific examples of triene or tetraene comonomers which may be used in the present invention are: 6,10-dimethyl-1,5,9-undecatriene, 5,9-dimethyl-1,4,8-decatriene, 6,9-dimethyl-1,5,8-decatriene, 6,8,9-trimethyl-1,6,8-decatriene, 6,10,14-trimethyl-1,5,9,13-pentadecatetraene, or mixtures thereof. Preferably, the polyene is a diene.

Preferably, copolymer (i) or copolymer (ii) or both have a melting point of from 140°C to 180°C.

Preferably, copolymer (i) has a melting enthalpy of from 25 J/g to 80 J/g.

Preferably, copolymer (ii) has a melting enthalpy of from 10 J/g to 90 J/g when heterophasic, and from 50 J/g to 100 J/g when homophasic (substantially free from heterophasic phase).

Advantageously, when the thermoplastic material of the insulating layer comprises a blend of copolymer (i) and copolymer (ii), the ratio between copolymer (i) and copolymer (ii) is of from 1:9 to 8:2, preferably of from 2:8 to 7:3.

Advantageously, when the thermoplastic material of the insulating layer comprises a blend of a propylene homopolymer and at least one of copolymer (i) and copolymer (ii), the ratio between the propylene homopolymer and copolymer (i) or copolymer (ii) or both is of from 0.5:9.5 to 5:5, preferably from 1:9 to 3:7.

Preferably, the thermoplastic material of the insulating layer comprises a blend of a propylene homopolymer with one copolymer (i) and two copolymers (ii); in this case, one of the copolymers (ii) is a heterophasic copolymer, while the other is homophasic.

As to the dielectric fluid (b), high compatibility between the dielectric fluid and the polymer base material is necessary to obtain a microscopically homogeneous dispersion of the dielectric fluid in the polymer base material. The dielectric fluid suitable for forming the cable covering layer of the present invention should comprise no polar compounds or only a limited quantity thereof, in order to avoid a significant increase of the dielectric losses.

Preferably, the concentration by weight of said at least one dielectric fluid in said thermoplastic polymer material is lower than the saturation concentration of said dielectric fluid in said thermoplastic polymer material. The saturation concentration of the dielectric fluid in the thermoplastic polymer material may be determined by a fluid absorption method on Dumbell specimens as described, for example, in WO 04/066317.

By using the dielectric fluid in an amount as defined above, thermomechanical properties of the insulating layer are maintained and exudation of the dielectric fluid from the thermoplastic polymer material is avoided.

The at least one dielectric fluid is generally compatible with the thermoplastic polymer material. "Compatible" means that the chemical composition of the fluid and of the thermoplastic polymer material is such as to result into a microscopically homogeneous dispersion of the dielectric fluid into the polymer material upon mixing the fluid into the polymer, similarly to a plasticizer.

Generally, the weight ratio between the at least one dielectric fluid (b) and the thermoplastic polymer material (a) may be from 1:99 to 25:75, preferably from 2:98 to 15:85.

It has also to be noticed that the use of a dielectric fluid with a relatively low melting point or low pour point (e.g. a melting point or a pour point not higher than 80°C) allows an easy handling of the dielectric fluid which may be melted with no need of additional and complex manufacturing steps (e.g. a melting step of the dielectric fluid) and/or apparatuses for admixing the liquid with the polymer material.

According to a further preferred embodiment, the dielectric fluid has a melting point or a pour point of from -130°C to +80°C.

The melting point may be determined by known techniques such as, for example, by Differential Scanning Calorimetry (DSC) analysis.

Suitable dielectric fluids for use in the cable of the invention are described, e.g., in WO 02/03398, WO 02/27731, WO 04/066318, WO 07/048422 and WO 08/058572, all in the Applicant's name.

According to a further preferred embodiment, the dielectric fluid has a predetermined viscosity in order to prevent fast diffusion of the liquid within the insulating layer and hence its outward migration, as well as to enable the dielectric fluid to be easily fed and mixed into the thermoplastic polymer material. Generally, the dielectric fluid of the invention has a viscosity, at 40°C, of from 10 cSt to 800 cSt, preferably of from 20 cSt to 500 cSt (measured according to ASTM standard D445-03).

Preferably, the dielectric fluid according to the invention has a ratio of number of aromatic carbon atoms to total number of carbon atoms (hereinafter also referred to as Cₐᵣ/Cₜₒₜ) greater than or equal to 0.3. Preferably, Cₐᵣ/Cₜₒₜ is lower than 1. For example, Cₐᵣ/Cₜₒₜ is from 0.4 to 0.9. The number of aromatic carbon atoms is intended to be the number of carbon atoms which are part of an aromatic ring.

The ratio of number of aromatic carbon atoms to total number of carbon atoms of the dielectric fluids according to the invention is sign of aromaticity.

The ratio of number of aromatic carbon atoms with respect to the total number of carbon atoms may be determined according to ASTM standard D3238-95(2000)el.

Examples of suitable dielectric fluids are: aromatic oils, either monocyclic, polycyclic (condensed or not) or heterocyclic (i.e. containing at least one heteroatom selected from oxygen, nitrogen or sulfur, preferably oxygen), wherein aromatic or heteroaromatic moieties are substituted by at least one alkyl group C₁-C₂₀, and mixtures thereof. When two or more cyclic moieties are present, such moieties may be linked by an alkenyl group C₁-C₅.

For example, the dielectric fluid comprises at least one alkylaryl hydrocarbon having the structural formula (I): 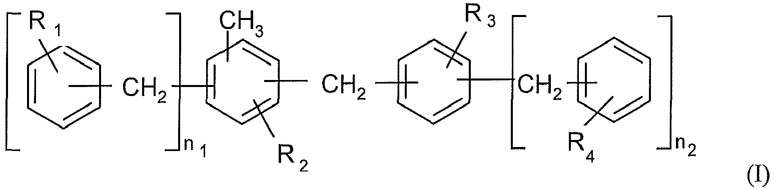 wherein:
R₁, R₂, R₃ and R₄, equal or different, are hydrogen or methyl;
n₁ and n₂, equal or different, are zero, 1 or 2, with the proviso that the sum n1+n2 is less than or equal to 3.

In another example, the dielectric fluid comprises at least one diphenyl ether having the following structural formula (II): 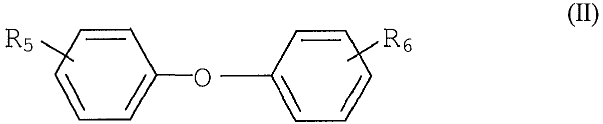 wherein R₅ and R₆ are equal or different and represent hydrogen, a phenyl group non-substituted or substituted by at least one alkyl group, or an alkyl group non-substituted or substituted by at least one phenyl. By alkyl group it is meant a linear or branched C₁-C₂₄, preferably C₁-C₂₀, hydrocarbon radical, with the proviso that the ratio of number of aromatic carbon atoms to total number of carbon atoms is greater than or equal to 0.3. The nucleating agents (c) according to the present invention are selected from aromatic sorbitol acetals of formula (III): 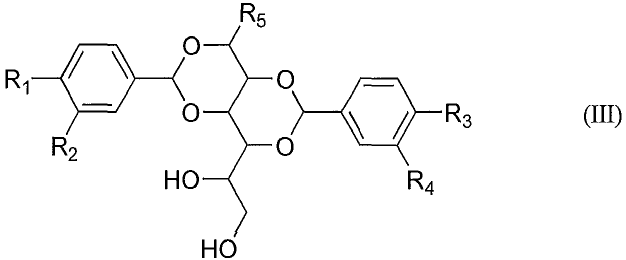 wherein:
R₁, R₂, R₃, R₄, and R₅, equal or different from each other, are selected from: hydrogen, C₁-C₄ alkyl, C₁-C₄ alkoxy, C₁-C₄ alkenyl, or R₁ and R₂ or R₃ and R₄ together form a carbocyclic ring containing up to 6 carbon atoms.

More preferably, R₁, R₂, R₃, R₄, and R₅, equal or different from each other, are selected from: hydrogen, methyl, n-propyl, iso-propyl, n-butyl, iso-butyl, tert-butyl, allyl, with the proviso that at least one of R₁, R₂ and R₃ is different from hydrogen.

Even more preferably, the at least one nucleating agent is selected from the compounds of formula (III) wherein:
R₁ = R₃ = methyl, R₂ = R₄ = methyl, R₅ = hydrogen;
R₁ = R₃ = methyl, R₂ = R₄ = hydrogen, R₅ = hydrogen;
R₁ = R₃ = ethyl, R₂ = R₄ = hydrogen, R₅ = hydrogen;
R₁ = R₃ = iso-propyl, R₂ = R₄ = hydrogen, R₅ = hydrogen;
R₁ = R₃ = iso-butyl, R₂ = R₄ = hydrogen, R₅ = hydrogen;
R₁ and R₂ = condensed cyclohexyl group, R₃ and R₄ = condensed cyclohexyl group, R₅ = hydrogen;
R₁ = R₃ = n-propyl, R₂ = R₄ = hydrogen, R₅ = allyl;
R₁ = n-propyloxy, R₃ = n-propyl, R₂ = R₄ = hydrogen, R₅ = allyl;
R₁ is n-propyloxy, R₃ = n-propyl, R₂ = R₄ = hydrogen, R₅ = n-propyl;
R₁ = R₃ = n-propyl, R₂ = R₄ = hydrogen, R₅ = n-propyl.

Particularly preferred are aromatic sorbitol acetals of formula: 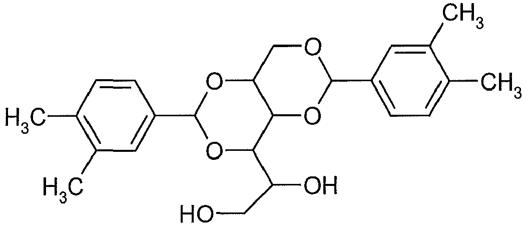 1,3:2,4-bis(3,4-dimethylbenzylidene)sorbitol (commercial product Millad™ 3988 by Milliken & Co.);
or of formula: 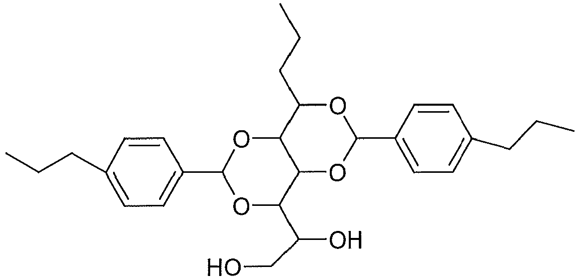 bis(4-propylbenzylidene)propylsorbitol (commercial product Millad™ NX8000 by Milliken & Co.).

Further details about the aromatic sorbitol acetals to be preferably used as nucleating agents according to the present invention may be found, e.g., in US 5,049,605 and 7,662,978, and in WO 2005/111134.

Preferably, said at least one nucleating agent is present in the electrically insulating layer in an amount of from 0.05 to 10% by weight, more preferably from 0.1 to 5% by weight, with respect to the total weight of the insulating layer.

Other components may be added in minor amounts to the thermoplastic polymer material according to the present invention, including antioxidants, processing aids or mixtures thereof.

Conventional antioxidants suitable for the purpose are, for example, distearyl- or dilauryl-thiopropionate and pentaerythrityl-tetrakis [3-(3,5-di-t-butyl-4-hydroxyphen-yl)-propionate], or mixtures thereof.

Processing aids which may be added to the polymer composition include, for example, calcium stearate, zinc stearate, stearic acid, or mixtures thereof.

According to a preferred embodiment, the cable according to the present invention includes also at least one semiconductive layer. The semiconductive layer is preferably formed by a semiconductive material comprising components (a) and (b) as disclosed above, and at least one conductive filler (d), preferably a carbon black filler.

The at least one conductive filler is generally dispersed within the thermoplastic polymer material in a quantity such as to provide the material with semiconductive properties, namely to obtain a volumetric resistivity value, at room temperature, of less than 500 Ω·m, preferably less than 20 Ω·m. Typically, the amount of carbon black can range between 1 and 50% by weight, preferably between 3 and 30% by weight, relative to the weight of the polymer.

The use of the same base polymer composition for both the insulating layer and the semiconductive layers is particularly advantageous in producing cables for medium or high voltage, since it ensures excellent adhesion between adjacent layers and hence a good electrical behaviour, particularly at the interface between the insulating layer and the inner semiconductive layer, where the electrical field and hence the risk of partial discharges are higher.

The polymeric compositions for the cable according to the present invention may be produced by mixing together the thermoplastic polymer material, the dielectric fluid, the nucleating agent and any other optional additive, by using methods known in the art. Mixing may be carried out for example by an internal mixer of the type with tangential rotors (Banbury) or with interpenetrating rotors; in a continuous mixer of Ko-Kneader (Buss) type, of co- or counterrotating double-screw type; or in a single screw extruder.

According to a preferred embodiment, the dielectric fluid may be added to the thermoplastic polymer material during the extrusion step by direct injection into the extruder cylinder as disclosed, for example, in WO 02/47092 in the name of the Applicant.

An example of a manufacturing process suitable for manufacturing a cable according to the present invention is described in PCT/EP2010/070677, in the name of the Applicant.

Although the present description is mainly focused on cables for transporting or distributing medium or high voltage energy, the polymer composition of the invention may be used for coating electrical devices in general and in particular cable of different type, for example low voltage cables (i.e. cables carrying a voltage lower than 1 kV), telecommunications cables or combined energy/telecommunications cables, or accessories used in electrical lines, such as terminals, joints, connectors and the like.

### Brief description of the drawing

Further characteristics will be apparent from the detailed description given hereinafter with reference to the accompanying drawing, in which:

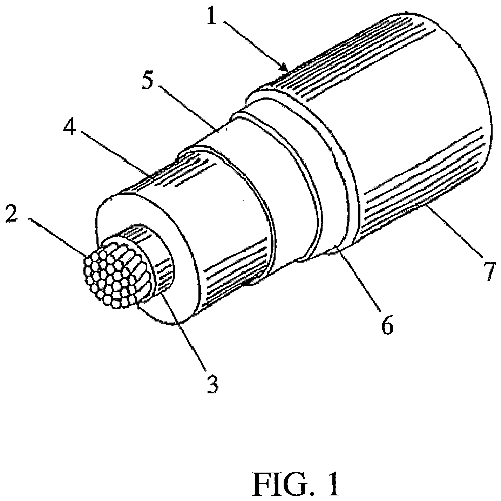

Figure 1 is a perspective view of an energy cable, particularly suitable for medium or high voltage, according to the invention.

### Detailed description of the preferred embodiments

In Figure 1, the cable (1) comprises a conductor (2), an inner layer with semiconductive properties (3), an intermediate layer with insulating properties (4), an outer layer with semiconductive properties (5), a metal screen layer (6) and a sheath (7).

The conductor (2) generally consists of metal wires, preferably of copper or aluminium or alloys thereof, stranded together by conventional methods, or of a solid aluminium or copper rod.

The insulating layer (4) may be produced by extrusion, around the conductor (2), of a composition according to the present invention.

The semiconductive layers (3) and (5) are also made by extruding polymeric materials usually based on polyolefins, preferably a thermoplastic polymer material according to the present disclosure, made to be semiconductive by adding at least one conductive filler, usually carbon black.

Around the outer semiconductive layer (5), a metal screen layer (6) is usually positioned, made of electrically conducting wires or strips helically wound around the cable core or of an electrically conducting tape longitudinally wrapped and overlapped (preferably glued) onto the underlying layer. The electrically conducting material of said wires, strips or tape is usually copper or aluminium or alloys thereof.

The screen layer (6) may be covered by a sheath (7), generally made from a polyolefin, usually polyethylene.

The cable can be also provided with a protective structure (not shown in Figure 1) the main purpose of which is to mechanically protect the cable against impacts or compressions. This protective structure may be, for example, a metal reinforcement or a layer of expanded polymer as described in WO 98/52197 in the name of the Applicant.

The cable according to the present invention may be manufactured in accordance with known methods, for example by extrusion of the various layers around the central conductor. The extrusion of two or more layers is advantageously carried out in a single pass, for example by the tandem method in which individual extruders are arranged in series, or by co-extrusion with a multiple extrusion head. The screen layer is then applied around the so produced cable core. Finally, the sheath according to the present invention is applied, usually by a further extrusion step.

The cable of the present invention is preferably used for alternating current (AC) power transmission.

Figure 1 shows only one embodiment of a cable according to the invention. Suitable modifications can be made to this embodiment according to specific technical needs and application requirements without departing from the scope of the invention.

The following examples are provided to further illustrate the invention.

### EXAMPLES 1-2.

The following compositions were prepared with the amounts reported in Table 1 (expressed as % by weight with respect to the total weight of the composition).

In all of the examples, the propylene copolymer was fed directly into the extruder hopper. Subsequently, the dielectric fluid, previously mixed with the antioxidant and the nucleating agent (if any), was injected at high pressure into the extruder. An extruder having a diameter of 80 mm and a L/D ratio of 25 was used. The injection was made during the extrusion at about 20 D from the beginning of the extruder screw by means of injection points.

**TABLE 1**

| EXAMPLE | 1 (*) | 2 |
|---|---|---|
| Polypropylene mixture | 94.0 | 92.0 |
| Marlotherm™ SH | 5.7 | 5.7 |
| Millad™ NX 20 | -- | 2.0 |
| Antioxidant | 0.3 | 0.3 |

| | | |
|---|---|---|
| (*) comparative | | |

Polypropylene mixture: 25/75 mixture of a propylene-ethylene random copolymer (melting enthalpy 65.1 J/g) and a propylene heterophasic copolymer (melting enthalpy 30 J/g);
Marlotherm™ SH: dibenzyltoluene (DBT), aromatic carbon atoms/total carbon atoms ratio = 0.86 (Sasol Olefins & Surfactants GmbH);
Millad™ NX 20: polypropylene masterbatch containing 80% by weight of Millad™ NX8000 (bis(4-propylbenzylidene)propylsorbitol) (Milliken & Co.); the amount reported in Table I refers to the amount of nuclating agent actually added;
Antioxidant: 4,6-bis(octylthiomethyl)-o-cresol.

The dielectric breakdown strength (DS) of sample cables (200 m long) having an insulating layer based on the composition of Examples 1 or 2 was evaluated in alternating current condition. In each cable, the conductor (70 mm²) was coated by an insulating layer having a thickness of 5.5 mm. The DS measurements were made by applying to these sample cables an alternating current at 50 Hz starting with a voltage of 50 kV and increasing in steps of 10 kV every 10 minutes until perforation of the test-piece occurred. Each measurement was repeated on 3 test-pieces. The values given in Table 2 are the arithmetic mean of the individual measured values.

**TABLE 2**

| EXAMPLE | Dielectric strength (kV/mm) |
|---|---|
| 1 (*) | 45.6 |
| 2 | 55.3 |

| | |
|---|---|
| (*) comparative | |

The DS of the cable having as insulating layer the composition according to Example 2 (invention) was increased of about 20% with respect to that of the cable according to Example 1 (comparative), wherein the insulating material is devoid of any nucleating agent.

A visual inspection by micrograph of the sample containing a nucleating agent according to the invention showed a much even aspect than a sample with the same composition and manufacturing process, but free from nucleating agent.

## Claims

1. A cable comprising at least one electrical conductor and at least one electrically insulating layer surrounding said electrical conductor, wherein the at least one electrically insulating layer comprises:
(a) a thermoplastic polymer material selected from:
- at least one copolymer (i) of propylene with at least one olefin comonomer selected from ethylene and an α-olefin other than propylene, said copolymer having a melting points determined by DSC greater than or equal to 130°C and a melting enthalpy of from 20 J/g to 90 J/g;
- a blend of at least one copolymer (i) with at least one copolymer (ii) of ethylene with at least one α-olefin, said copolymer (ii) having a melting enthalpy of from 0 J/g to 120 J/g;
- a blend of at least one propylene homopolymer with at least one copolymer (i) or copolymer (ii);
at least one of copolymer (i) and copolymer (ii) being a heterophasic copolymer;
(b) at least one dielectric fluid intimately admixed with the thermoplastic polymer material;
(c) at least one nucleating agent;
wherein the at least one the nucleating agent (c) is selected from aromatic sorbitol acetals of formula (III): 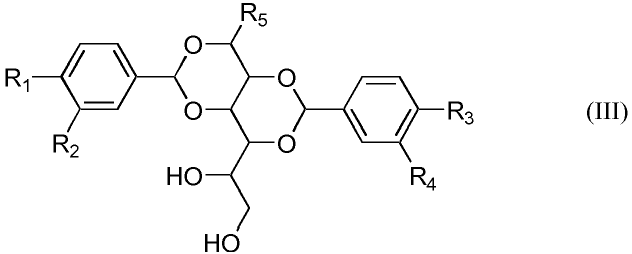 wherein:
R₁, R₂, R₃, R₄, and R₅, equal or different from each other, are selected from: hydrogen, C₁-C₄ alkyl, C₁-C₄ alkoxy, C₁-C₄ alkenyl, or R₁ and R₂ or R₃ and R₄ together form a carbocyclic ring containing up to 6 carbon atoms

2. The cable according to claim 1, wherein the copolymer (i) is a propylene/ethylene copolymer.

3. The cable according to claim 1, wherein at least one copolymer (ii) is a linear low density polyethylene copolymer.

4. The cable according to claim 1, wherein, in the copolymer (i) or copolymer (ii) or both, when heterophasic, an elastomeric phase is present in an amount equal to or greater than 45 wt% with respect to the total weight of the copolymer.

5. The cable according to claim 1, wherein copolymer (i) has a melting enthalpy of from 25 J/g to 80 J/g.

6. The cable according to claim 1, wherein copolymer (ii) has a melting enthalpy of from 10 J/g to 90 J/g when heterophasic, and from 50 J/g to 100 J/g when homophasic.

7. The cable according to claim 1, wherein the thermoplastic material of the insulating layer comprises a blend of a propylene homopolymer with one copolymer (i) and two copolymers (ii).

8. The cable according to claim 1, wherein the at least one dielectric fluid (b) has a ratio of number of aromatic carbon atoms to total number of carbon atoms (Cₐᵣ/ Cₜₒₜ) greater than or equal to 0.3.

9. The cable according to claim 1, wherein the at least one the nucleating agent (c) is selected from aromatic sorbitol acetals of formula (III) wherein:
R₁ = R₃ = methyl, R₂ = R₄ = methyl, R₅ = hydrogen;
R₁ = R₃ = methyl, R₂ = R₄ = hydrogen, R₅ = hydrogen;
R₁ = R₃ = ethyl, R₂ = R₄ = hydrogen, R₅ = hydrogen;
R₁ = R₃ = iso-propyl, R₂ = R₄ = hydrogen, R₅ = hydrogen;
R₁ = R₃ = iso-butyl, R₂ = R₄ = hydrogen, R₅ = hydrogen;
R₁ and R₂ = condensed cyclohexyl group, R₃ and R₄ = condensed cyclohexyl group, R₅ = hydrogen;
R₁ = R₃ = n-propyl, R₂ = R₄ = hydrogen, R₅ = allyl;
R₁ = n-propyloxy, R₃ = n-propyl, R₂ = R₄ = hydrogen, R₅ = allyl;
R₁ is n-propyloxy, R₃ = n-propyl, R₂ = R₄ = hydrogen, R₅ = n-propyl;
R₁ = R₃ = n-propyl, R₂ = R₄ = hydrogen, R₅ = n-propyl.

10. The cable according to claim 9, wherein the at least one the nucleating agent (c) is selected from:
1,3:2,4-bis(3,4-dimethylbenzylidene)sorbitol,
bis(4-propylbenzylidene)propylsorbitol;
or mixtures thereof.

11. The cable according to claim 1, wherein the at least one nucleating agent (c) is present in an amount of from 0.05 to 10% by weight, preferably from 0.1 to 5% by weight, with respect to the total weight of the insulating layer.

## Patentansprüche

1. Kabel umfassend wenigstens einen elektrischen Leiter und wenigstens eine elektrisch isolierende Schicht, die den elektrischen Leiter umgibt, wobei die wenigstens eine elektrisch isolierende Schicht umfasst:
(a) ein thermoplastisches Polymermaterial ausgewählt aus:
- wenigstens einem Copolymer (i) von Propylen mit wenigstens einem Olefin-Comonomer ausgewählt aus Ethylen und einem anderen α-Olefin als Propylen, wobei das Copolymer einen durch DSC bestimmten Schmelzpunkt größer als oder gleich 130 °C und eine Schmelzenthalpie von 20 J/g bis 90 J/g aufweist;
- einer Mischung von wenigstens einem Copolymer (i) mit wenigstens einem Copolymer (ii) von Ethylen mit wenigstens einem α-Olefin, wobei das Copolymer (ii) eine Schmelzenthalpie von 0 J/g bis 120 J/g aufweist;
- einer Mischung von wenigstens einem Propylen-Homopolymer mit wenigstens einem Copolymer (i) oder Copolymer (ii);
wobei wenigstens eines von Copolymer (i) und Copolymer (ii) ein heterophasisches Copolymer ist;
(b) wenigstens eine dielektrische Flüssigkeit, die mit dem thermoplastischen Polymer-material innig vermischt ist;
(c) wenigstens einen Keimbildner;
wobei der wenigstens eine Keimbilder (c) aus aromatischen Sorbitolacetalen der Formel (III) ausgewählt ist: 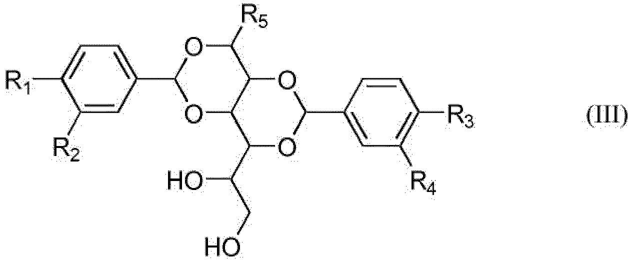 worin:
R₁, R₂, R₃, R₄ und R₅, die gleich oder voneinander verschieden sind, ausgewählt sind aus: Wasserstoff, C₁-C₄-Alkyl, C₁-C₄-Alkoxy, C₁-C₄-Alkenyl, oder R₁ und R₂ oder R₃ und R₄ zusammen einen carbocyclischen Ring bilden, der bis zu 6 Kohlenstoffatome enthält.

2. Kabel gemäß Anspruch 1, wobei das Copolymer (i) ein Propylen/Ethylen-Copolymer ist.

3. Kabel gemäß Anspruch 1, wobei wenigstens ein Copolymer (ii) ein Copolymer von linearem Polyethylen niedriger Dichte ist.

4. Kabel gemäß Anspruch 1, wobei in dem Copolymer (i) oder Copolymer (ii) oder beiden, wenn sie heterophasisch sind, eine elastomere Phase in einer Menge vorhanden ist, die gleich oder größer als 45 Gew.-%, bezogen auf das Gesamtgewicht des Copolymers, ist.

5. Kabel gemäß Anspruch 1, wobei Copolymer (i) eine Schmelzenthalpie von 25 J/g bis 80 J/g aufweist.

6. Kabel gemäß Anspruch 1, wobei Copolymer (ii) eine Schmelzenthalpie von 10 J/g bis 90 J/g aufweist, wenn es heterophasisch ist, und von 50 J/g bis 100 J/g aufweist, wenn es homophasisch ist.

7. Kabel gemäß Anspruch 1, wobei das thermoplastische Material der isolierenden Schicht eine Mischung von einem Propylen-Homopolymer mit einem Copolymer (i) und zwei Copolymeren (ii) umfasst.

8. Kabel gemäß Anspruch 1, wobei die wenigstens eine dielektrische Flüssigkeit (b) ein Verhältnis der Zahl von aromatischen Kohlenstoffatomen zur Gesamtzahl von Kohlenstoffatomen (Cₐᵣ/C_{ges}.) größer als oder gleich 0,3 aufweist.

9. Kabel gemäß Anspruch 1, wobei der wenigstens eine Keimbildner (c) aus aromatischen Sorbitolacetalen der Formel (III) ausgewählt ist, worin:
R₁ = R₃ = Methyl, R₂ = R₄ = Methyl, R₅ = Wasserstoff;
R₁ = R₃ = Methyl, R₂ = R₄ = Wasserstoff, R₅ = Wasserstoff;
R₁ = R₃ = Ethyl, R₂ = R₄ = Wasserstoff, R₅ = Wasserstoff;
R₁ = R₃ = Isopropyl, R₂ = R₄ = Wasserstoff, R₅ = Wasserstoff;
R₁ = R₃ = Isobutyl, R₂ = R₄ = Wasserstoff, R₅ = Wasserstoff;
R₁ und R₂ = eine kondensierte Cyclohexylgruppe, R₃ und R₄ = eine kondensierte Cyclohexylgruppe, R₅ = Wasserstoff;
R₁ = R₃ = n-Propyl, R₂ = R₄ = Wasserstoff, R₅ = Allyl;
R₁ = n-Propyloxy, R₃ = n-Propyl, R₂ = R₄ = Wasserstoff, R₅ = Allyl;
R₁ = n-Propyloxy, R₃ = n-Propyl, R₂ = R₄ = Wasserstoff, R₅ = n-Propyl;
R₁ = R₃ = n-Propyl, R₂ = R₄ = Wasserstoff, R₅ = n-Propyl.

10. Kabel gemäß Anspruch 9, wobei der wenigstens eine Keimbildner (c) ausgewählt ist aus:
1,3:2,4-Bis(3,4-dimethylbenzyliden)sorbitol,
Bis(4-propylbenzyliden)propylsorbitol;
oder Mischungen davon.

11. Kabel gemäß Anspruch 1, wobei der wenigstens eine Keimbildner (c) in einer Menge von 0,05 bis 10 Gew.-%, vorzugsweise von 0,1 bis 5 Gew.%, bezogen auf das Gesamtgewicht der isolierenden Schicht, vorhanden ist.

## Revendications

1. Câble comprenant au moins un conducteur électrique et au moins une couche électriquement isolante entourant ledit conducteur électrique, dans lequel l'au moins une couche électriquement isolante comprend :
(a) un matériau polymère thermoplastique choisi parmi :
- au moins un copolymère (i) de propylène avec au moins un comonomère d'oléfine choisi parmi l'éthylène et une α-oléfine autre que le propylène, ledit copolymère possédant un point de fusion déterminé par DSC supérieur ou égal à 130 °C et une enthalpie de fusion de 20 J/g à 90 J/g ;
- un mélange d'au moins un copolymère (i) avec au moins un copolymère (ii) d'éthylène avec au moins une α-oléfine, ledit copolymère (ii) possédant une enthalpie de fusion de 0 J/g à 120 J/g ;
- un mélange d'au moins un homopolymère de propylène avec au moins un copolymère (i) ou un copolymère (ii) ;
au moins un parmi le copolymère (i) et le copolymère (ii) étant un copolymère hétérophasique ;
(b) au moins un fluide diélectrique intimement mélangé avec le matériau polymère thermoplastique ;
(c) au moins un agent de nucléation ;
dans lequel l'au moins un agent de nucléation (c) est choisi parmi les acétals de sorbitol aromatiques de formule (III) : 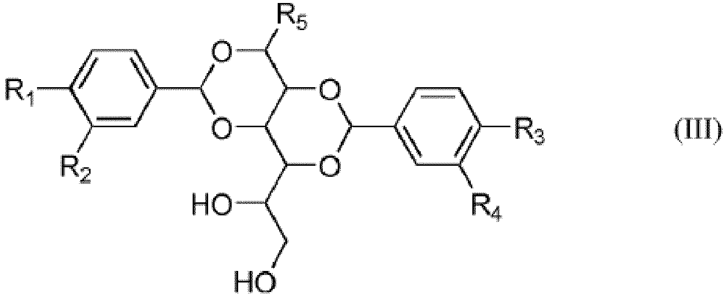 dans laquelle :
R₁, R₂, R₃, R₄ et R₅, identiques ou différents les uns des autres, sont choisis parmi : un hydrogène, un alkyle en C₁ à C₄, un alcoxy en C₁ à C₄, un alcényle en C₁ à C₄, ou R₁ et R₂ ou R₃ et R₄ forment ensemble un cycle carbocyclique contenant jusqu'à 6 atomes de carbone.

2. Câble selon la revendication 1, dans lequel le copolymère (i) est un copolymère de propylène/éthylène.

3. Câble selon la revendication 1, dans lequel au moins un copolymère (ii) est un copolymère de polyéthylène linéaire à basse densité.

4. Câble selon la revendication 1, dans lequel, dans le copolymère (i) ou le copolymère (ii) ou les deux, quand ils sont hétérophasiques, une phase élastomère est présente en une quantité supérieure ou égale à 45 % en poids par rapport au poids total du copolymère.

5. Câble selon la revendication 1, dans lequel le copolymère (i) possède une enthalpie de fusion de 25 J/g à 80 J/g.

6. Câble selon la revendication 1, dans lequel le copolymère (ii) possède une enthalpie de fusion de 10 J/g à 90 J/g quand il est hétérophasique, et de 50 J/g à 100 J/g quand il est homophasique.

7. Câble selon la revendication 1, dans lequel le matériau thermoplastique de la couche isolante comprend un mélange d'un homopolymère de propylène avec un copolymère (i) et deux copolymères (ii).

8. Câble selon la revendication 1, dans lequel l'au moins un fluide diélectrique (b) possède un rapport nombre d'atomes de carbone aromatiques sur nombre total d'atomes de carbone (Cₐᵣ/Cₜₒₜ) supérieur ou égal à 0,3.

9. Câble selon la revendication 1, dans lequel l'au moins un agent de nucléation (c) est choisi parmi les acétals de sorbitol aromatiques de formule (III) dans laquelle :
R₁ = R₃ = méthyle, R₂ = R₄ = méthyle, R₅ = hydrogène ;
R₁ = R₃ = méthyle, R₂ = R₄ = hydrogène, R₅ = hydrogène ;
R₁ = R₃ = éthyle, R₂ = R₄ = hydrogène, R₅ = hydrogène ;
R₁ = R₃ = iso-propyle, R₂ = R₄ = hydrogène, R₅ = hydrogène ;
R₁ = R₃ = iso-butyle, R₂ = R₄ = hydrogène, R₅ = hydrogène ;
R₁ et R₂ = groupe cyclohexyle condensé, R₃ et R₄ = groupe cyclohexyle condensé, R₅ = hydrogène ;
R₁ = R₃ = n-propyle, R₂ = R₄ = hydrogène, R₅ = allyle ;
R₁ = n-propyloxy, R₃ = n-propyle, R₂ = R₄ = hydrogène, R₅ = allyle ;
R₁ est un n-propyloxy, R₃ = n-propyle, R₂ = R₄ = hydrogène, R₅ = n-propyle ;
R₁ = R₃ = n-propyle, R₂ = R₄ = hydrogène, R₅ = n-propyle .

10. Câble selon la revendication 9, dans lequel l'au moins un agent de nucléation (c) est choisi parmi :
le 1,3:2,4-bis(3,4-diméthylbenzylidène)sorbitol,
le bis(4-propylbenzylidène)propylsorbitol ;
ou leurs mélanges.

11. Câble selon la revendication 1, dans lequel l'au moins un agent de nucléation (c) est présent en une quantité de 0,05 à 10 % en poids, de préférence de 0,1 à 5 % en poids, par rapport au poids total de la couche isolante.
